# EUROPÄISCHE PATENTSCHRIFT

(11) **EP 1 749 587 B1**
(45) Veröffentlichungstag und Bekanntmachung des Hinweises auf die Patenterteilung: **26.11.2008**
(21) Anmeldenummer: 06015006.7
(22) Anmeldetag: 19.07.2006
(51) Int. Cl.: B05D 7/06, B32B 21/02, B27N 7/00

(54) **Bauplatte aus Holzwerkstoff und Verfahren zur Herstellung**
Wood-based board for building applications and method for making it
Planche en bois reconstitué pour le bâtiment et méthode de sa fabrication

(30) Priorität: 01.08.2005 DE 102005036579
(43) Veröffentlichungstag der Anmeldung: 07.02.2007
(73) Patentinhaber: Kronotec AG, 6006 Luzern (CH)
(72) Erfinder:
(74) Vertreter: Rehmann, Thorsten

(56) Entgegenhaltungen:
- EP-A- 0 747 134
- US-A- 4 308 298
- US-A- 4 897 291
- US-A- 5 733 596
- US-A- 6 010 793

## Beschreibung

Die Erfindung betrifft ein Verfahren zur Herstellung einer Bauplatte aus HolzwerkStoff, insbesondere OSB-Platte, bestehend aus mindestens drei Lagen gestreuter und harzbeleimter Späne, die unter erhöhtern Druck und erhöhter Temperatur verpresst wird.

Holzwerkstoffplatten, insbesondere OSB-Platten, bestehen aus mehreren Schichten großer, beleimter Späne, die zu Lagen gestreut werden, wobei jede Lage um 90° versetzt zur nächsten Lage ausgerichtet ist, um eine hohe Stabilität der Platte zu erhalten und einen Absperreffekt zu erzielen, der das Verziehen oder Schüsseln der Platte bei Feuchteänderungen einschränken soll. Da auch in den Deckschichten großflächige Späne verwendet werden, weist die OSB-Platte nach dem Pressen eine unebene Oberfläche auf. Die Fehlstellen an der Oberfläche, die so genannten Lunker, verhindern die Beschichtung von OSB-Platten mit herkömmlichen Dekoroberflächen, da auch nach der Beschichtung die unebene Oberfläche der OSB-Platte durch die Beschichtung durchscheint.

Damit eine OSB-Platte beschichtet werden kann, ohne dass die Oberflächenunebenheiten nach der Beschichtung noch sichtbar sind, muss die Oberfläche zunächst sehr sorgfältig gespachtelt und/oder geschliffen werden, um eine gute Verklebung zwischen Kern und Beschichtung zu erzielen und eine ebene Oberfläche zu erzielen.

Aus der US 6,010,793 ist bekannt, eine OSB-Platte an ihrer Oberfläche mit einem Kitt zu versehen, um die Unebenheiten der Plattenoberfläche auszugleichen. Der dazu eingesetzte Kitt kann insbesondere aus einem wässrigen Polymerisocyanatharz bestehen. Als Füllstoffe für den Kitt können beispielsweise Kreide, Talkum, Titanoxid oder andere organische oder anorganische Füllstoffe eingesetzt werden.

Die DE 41 40 207 A1 offenbart ein Verfahren zum Aufbringen eines Farbauftrags auf Faser- oder Spanplatten, bei dem der Auftrag einer wasserbasierten Farbe vor der Verpressung der Faser- oder Spanplatte erfolgt. Da die Fasern der Faser- oder Spanplatte durch das Auftragen der wasserbasierten Farbe aufquellen, sich aufrichten und eine rauhe Oberfläche erzeugen, werden sie durch den anschließenden Pressvorgang wieder in die Oberfläche der Platte eingedrückt, so dass eine ebene Oberfläche entsteht.

Die DE 100 01 227 C1 beschreibt ein Wand- oder Deckenpaneel aus einer OSB-Platte, auf das eine die OSB-Platte abdeckende transparente Deckschicht aufgebracht wird, die aus Papier, Kunststoff oder einem Lack bestehen kann. Die Unebenheiten der OSB-Plattenoberfläche werden vor dem Aufbringen der Deckschicht nicht durch eine spezielle Beschichtungsmasse ausgeglichen, so dass die Oberflächenunebenheiten auch nach dem Aufbringen der Deckschicht noch erkennbar sind.

Die US 5,733,596 offenbart ein Verfahren zur Aufbringung eines kittartigen, wasserbasierten Füllstoffmaterials auf ein Holzsubstrat. Das kittartige Füllstoffmaterial weist einen Feststoffgehalt von mindestens 70 % und eine Viskosität von 100.000 cps auf. Zur Einstellung der Temperatur des Beschichtungsmittels wird die Restenergie in der Platte ermittelt. Die Plattentemperatur bildet also eine Regelgröße zur Steuerung des diskontinuierlichen Arbeitsablaufes.

Aus der US 4,308,298 A ist ein Verfahren zur Veredelung cellulosehaltiger Platten mit Oberflächenfehlem bekannt. Hierzu wird ein härtbares, flüssiges Bindemittel auf die Platte aufgebracht und ausgehärtet. Das härtbare, flüssige Bindemittel kann einen körnigen, mineralischen Füllstoff mit einer Partikelgröße kleiner als 0,3 mm aufweisen.

Aus der US 4,897,291 A ist eine wasserbasierte Versiegelungsmischung bekannt, mit der Holzprodukte gegen Feuchteaufnahme und die daraus resultierende Quellung geschützt werden können. Die Mischung wird auf die Schnittkanten der Holzprodukte aufgetragen.

Die EP 0 747 134 A1 beschreibt ein Verfahren zur Beschichtung von Holzwerkstoffen mit einer Latex-Polymeremulsion, die mit einem Schäumungsmittel aufgeschäumt und anschließend auf den Holzwerkstoff aufgebracht und getrocknet wird. Nach dem Trocknungsprozess wird die aufgeschäumte Schicht ausgehärtet und zerstoßen, um eine ebene Werkstoffoberfläche zu erhalten.

Ist eine OSB-Platte mit ebener Oberfläche gefordert, bei der die Beschichtung der Oberfläche nach dem Pressvorgang erfolgen soll, so muss die fertige OSB-Platte durch nachfolgendes Schleifen und Beschichten veredelt werden. Da die Beschichtung von OSB-Platten nicht in der Pressanlage erfolgt, muss die OSB-Platte nach dem Verpressen zu einer speziellen Beschichtungsanlage befördert werden, was mit hohem Handling- und Logistikaufwand verbunden ist, so dass die Herstellung von beschichteten OSB-Platten sehr kostenintensiv ist. Zusätzlich ist das Abschleifen der sich an der Oberfläche von OSB-Platten während des Pressvorgangs bildenden Presshaut nachteilig, da einerseits die Feuchtebeständigkeit der Platte verringert wird, weil die versiegelnde Presshaut abgeschliffen wurde und andererseits die mechanische Belastbarkeit der Platte verringert wird, da die Außenbereiche der Deckschichten, die die höchsten Rohdichten und damit die besten Festigkeitseigenschaften aufweisen, abgeschliffen werden.

Von dieser Problemstellung ausgehend, soll die Herstellung der eingangs erläuterten Holzwerkstoffplatte, insbesondere OSB-Platte, vereinfacht werden.

Zur Problemlösung zeichnet sich das Verfahren zur Herstellung einer gattungsgemäßen Bauplatte aus Holzwerkstoff dadurch aus, dass nach dem Verpressen zumindest auf die obere Deckschicht eine Beschichtung aus einem wasserbasierten Lack aufgebracht wird, und dass der Beschichtung direkt nach dem Auftrag Zuschlag- und/oder Füllstoffe zugegeben werden.

Zusätzlich können auf die Beschichtung vor dem Aushärten Partikel aufgebracht, z.B. aufgestreut werden, um die Härte der Beschichtung zu erhöhen oder eine Oberflächenrauhigkeit zu erzielen, die den Einsatz der Bauplatten als begehbare Verkleidungsplatte beispielsweise im Dachstuhlbereich ermöglicht. Dazu werden insbesondere Partikel aus Quarzsand aufgestreut, die eine Partikelgröße von kleiner als 3 mm aufweisen.

Durch den Einsatz eines wasserbasierten Lackes, der Zuschlag- und/oder Füllstoff enthält, als Beschichtung für eine OSB-Platte kann auf den Einsatz von isocyanathaltigen Beschichtungsstoffen verzichtet werden. Dies hat den Vorteil, dass während des Verarbeitungsprozesses der Beschichtung geringere Anforderungen an Arbeitssicherheit zu stellen sind, da die wasserbasierten Lacke im Gegensatz zu isocyanathaltigen Beschichtungsmittein bei der Verarbeitung nicht toxisch sind und keine gesundheitlichen Risiken für die Arbeiter, die mit der Beschichtung von OSB-Platten beauftragt sind, verursachen. Weiterhin ist der Einsatz von wasserbasierten Lacken vorteilhaft, da die Aushärtung der Lacke allein durch ein Abdampfen des Wassers erfolgt und der Beschichtungsmischung keine weiteren Lösungsmittel oder Härter zugegeben werden müssen, wie dies zum Beispiel bei Reaktionsharzlacken auf Isocyanatbasis erforderlich ist. Die Herstellung Oberflächenunebenheiten ausgleichender Beschichtungen mit wasserbasierten Lacken ist somit bedeutend einfacher und kostengünstiger möglich. Je nachdem ob pigmentierte Lacke und/oder farbige Füll- und/oder Zuschlagsstoffe eingesetzt werden, können transparente Beschichtungen, z. B. bei pigmentlosen Lacken und durchsichtigen Füll- und/oder Zuschlagsstoffen erreicht werden. Werden pigmentierte Lacke und/oder farbige Zuschlags- und/oder Füllstoffe für die Beschichtung eingesetzt, so kann eine teilweise oder vollständig deckende Beschichtung der OSB-Platte erreicht werden. Auf diese Weise können verschiedenste optische Ansprüche, die an die beschichteten OSB-Platten gestellt werden, erfüllt werden.

Um die Füllkraft des wasserbasierten Lackes weiter zu erhöhen, und um den Anteil des im Vergleich zum wasserbasierten Lack günstigen Füllstoffs zu erhöhen, können dem wasserbasierten Lack Zuschlag- und/oder Füllstoff zugegeben werden, die zum Beispiel aus Holzmehl bestehen.

Damit durch die Beschichtung eine ebene Oberfläche erreicht werden kann, ist es vorteilhaft, dass die Partikelgröße der Zuschlag- und/oder Füllstoffe kleiner als 1 mm ist. Weiterhin sind Beschichtungen mit Zuschlag- und/oder Füllstoffen, die eine geringe Partikelgröße aufweisen, mit herkömmlichen Auftragswerken einfacher zu verarbeiten.

Um eine ebene Oberfläche auf der OSB-Platte erzielen zu können, ist es sinnvoll, das Flächengewicht der Beschichtung in einem Bereich von 10 bis 400 g/m² einzustellen.

Vorteilhafterweise kann ein wasserbasierter Lack aufgetragen werden, ohne dass befürchtet werden muss, dass sich Holzfasern an der Oberfläche der Platte aufstellen, da die Oberfläche der Platte durch die so genannte Presshaut vor dem Eindringen des Wassers geschützt ist.

Die Beschichtung kann in einem kontinuierlichen Verfahren direkt im Anschluss an den Pressvorgang (am Pressausgang) aufgebracht werden, um dadurch den Logistik- und Handlingaufwand bei der Plattenherstellung noch weiter zu reduzieren

Vorteilhafterweise kann zur Aushärtung der Beschichtung der Wärmeinhalt der Platte, die aus der Presse herausläuft, eingesetzt werden, so dass eine nachträgliche Aushärtung der Beschichtung durch zusätzliche Gebläse oder ähnliche Trocknungseinrichtungen nicht mehr nötig ist. Vorteilhafterweise beträgt die Temperatur der Bauplatte dazu mindestens etwa 60°C. Durch die Nutzung des Wärmegehaltes der OSB-Platte dampft der Wasseranteil der Beschichtung ab und der Lack härtet aus.

Vorteilhafterweise werden durch den Lackanteil der Beschichtung Unebenheiten der oberen oder unteren Deckschicht der Platte ausgeglichen. Zusätzlich kann durch den Lackanteil der Beschichtung die Deckschicht der Bauplatte versiegelt werden, so dass Wasser nicht mehr in die Spanschichten der Platte dringen kann und die Platte beispielsweise auch im Außenbereich einsetzbar ist.

Vorteilhafterweise ist die Beschichtung so eingestellt, dass sie vor der Beendigung des Abkühlvorgangs der Bauplatte ausgehärtet ist, damit die beschichtete Platte durch die vorhandenen Transporteinrichtungen, die sich an die Holzwerkstoffpresse anschließen, abtransportiert werden können und keine zusätzlichen Handling- und Logistikaufwendungen erforderlich sind.

Vorteilhaft erfolgt der Auftrag der Beschichtung durch Walzen. So kann der kontinuierliche Auftrag der Beschichtung sichergestellt werden und eine innige adhäsive Verbindung von Deckschicht und Beschichtung erfolgen. Es hat sich gezeigt, dass es vorteilhaft ist, dass die Beschichtung nach dem Walzenauftrag mit einem Abstreifer geglättet wird, um die Ebenheit der Beschichtung noch weiter zu erhöhen.

Die Beschichtung kann dazu während des Walzenauftrags oder nach dem Walzenauftrag glatt gestrichen werden.

Anstelle des Walzenauftrags kann die Beschichtung mit anderen vergleichbaren Auftragsverfahren, wie beispielsweise Aufsprühen, auf die Holzwerkstoffplatte aufgetragen werden.

Mit Hilfe einer Zeichnung sollen Ausführungsbeispiele der Erfindung nachfolgend näher erläutert werden. Es zeigen:
- Figur 1 -: den Querschnitt einer OSB-Platte mit Lackbeschichtung;
- Figur 2 -: eine Ausschnittsvergrößerung aus dem Querschnitt der OSB-Platte;
- Figur 3 -: eine Draufsicht auf die erfindungsgemäße OSB-Platte;
- Figur 4 -: das Rohdichteprofil der erfindungsgemäßen Bauplatte.

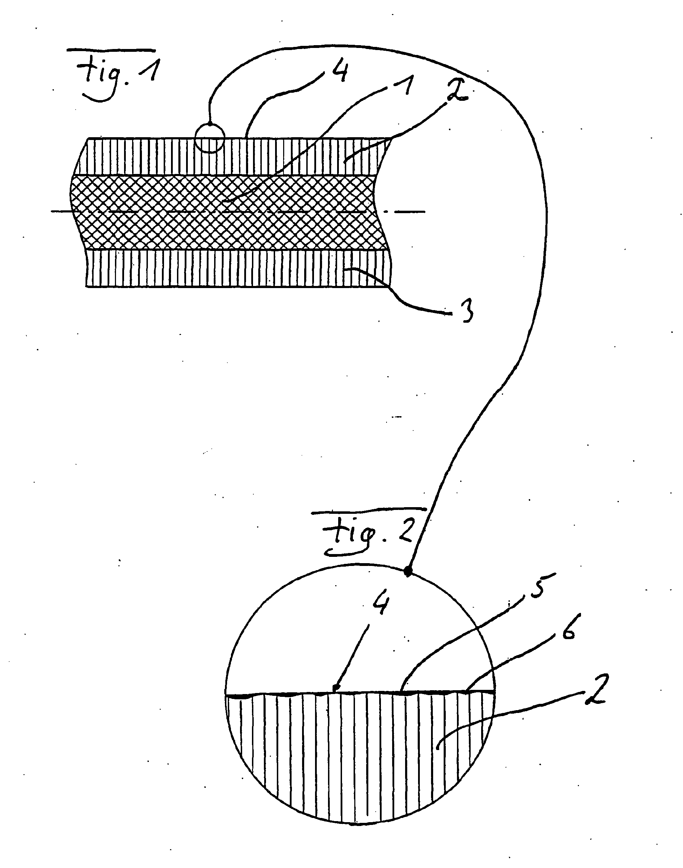

Figur 1 zeigt eine OSB-Platte 1 mit einer oberen Deckschicht 2 und einer unteren Deckschicht 3, auf der eine Beschichtung 4 zum Ausgleich der Oberflächenunebenheiten der oberen Deckschicht 2 aufgebracht ist. Die Beschichtung 4 besteht aus einem wasserbasierten Lack hat ein Flächengewicht von 400 g pro cm² und ist vollständig deckend ausgeführt.

Figur 2 zeigt die Ausschnittsvergrößerung der oberen Deckschicht 2 der OSB-Platte 1 und die auf sie aufgebrachte Beschichtung 4 aus einem wasserbasierten Lack mit Zuschlagsstoffen 5 und Füllstoffen 6. Als Füllstoff 6 wird Holzmehl verwendet. Die Partikelgröße der Zuschlag- und Füllstoffe 5, 6 ist kleiner als 1 mm. Die Beschichtung 4 wurde in einem kontinuierlichen Verfahren aufgebracht und zur Aushärtung der Beschichtung 4 wurde der Wärmeinhalt der OSB-Platte 1 eingesetzt. Dazu beträgt die Temperatur der Platte 60°. Die Beschichtung 4 aus einem wasserbasierten Lack härtet aus, indem der Wasseranteil der Beschichtung 4 abdampft. Durch den Lackanteil der Beschichtung 4 ist die obere Deckschicht 2 der OSB-Platte 1 versiegelt. Die Beschichtung 4 wurde durch Walzen aufgetragen und nach dem Auftrag mit einem Abstreifer geglättet. Vor dem Auftrag wurden der Beschichtung 4 Zuschlag- und Füllstoff 5, 6 zugegeben. Die Beschichtung 4 und die Oberfläche der OSB-Platte 1 gehen eine innige adhäsive Verbindung ein.

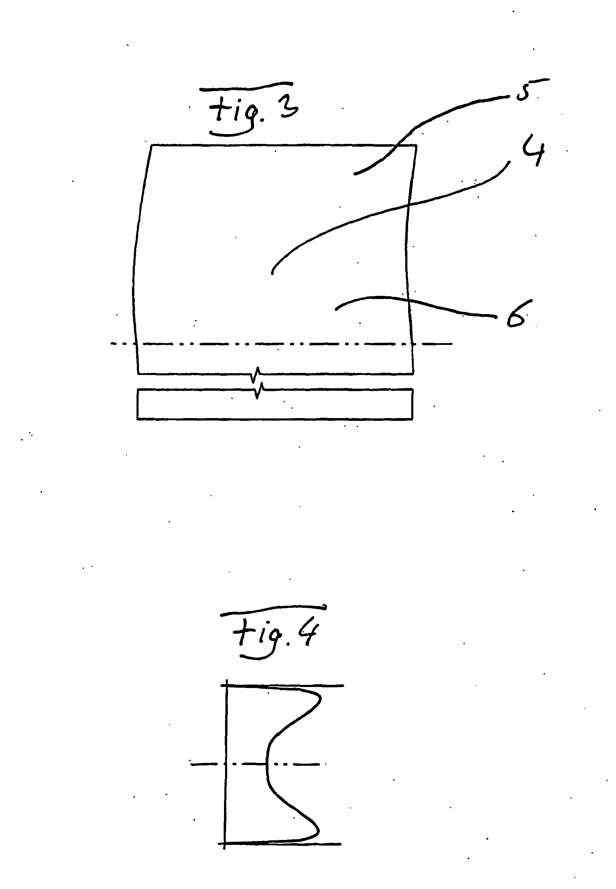

Figur 3 zeigt die Draufsicht auf eine OSB-Platte 1 mit einer Beschichtung 4. Durch die Zuschlag- und Füllstoffe 5, 6, die in die Beschichtung 4 aus einem wasserbasierten Lack eingebracht sind, wird eine ebene Oberfläche der OSB-Platte 1 erreicht, und die Oberfläche der OSB-Platte 1 wird zusätzlich versiegelt.

Figur 4 zeigt das Rohdichteprofil einer OSB-Platte 1, die für eine Beschichtung mit einem wasserbasierten Lack nicht abgeschliffen werden muss und Rohdichtespitzen im Bereich der oberen und unteren Deckschicht aufweist. Die Bereiche mit hohen Rohdichten sind die Bereiche mit den besten Festigkeitseigenschaften einer Holzwerktsoffplatte.

### Bezugszeichenliste

1 OSB-Platte
2 obere Deckschicht
3 untere Deckschicht
4 Beschichtung
5 Zuschlagsstoffe
6 Füllstoffe

## Patentansprüche

1. Verfahren zur Herstellung einer Bauplatte aus Holzwerkstoff, insbesondere OSB-Platte (1), mit einer oberen Deckschicht (2) und einer unteren Deckschicht (3), bestehend aus mindestens drei Lagen gestreuter und harzbeleimter Späne, die unter erhöhtem Druck und erhöhter Temperatur verpresst wird, **dadurch gekennzeichnet, dass** nach dem Verpressen zumindest auf die obere Deckschicht (2) eine Beschichtung (4) aus einem wasserbasierten Lack aufgebracht wird, und dass der Beschichtung (4) direkt nach dem Auftrag Zuschlag- und/oder Füllstoffe (5, 6) zugegeben werden.

2. Verfahren nach Anspruch 1, **dadurch gekennzeichnet, dass** auf die Beschichtung vor dem Aushärten (4) Partikel aufgebracht werden.

3. Verfahren nach Anspruch 2, **dadurch gekennzeichnet, dass** die Partikel aufgestreut werden.

4. Verfahren nach Anspruch 3, **dadurch gekennzeichnet, dass** Partikel (7) aus Quarzsand aufgestreut werden.

5. Verfahren nach Anspruch 4, **dadurch gekennzeichnet, dass** Partikel einer Partikelgröße kleiner als 3 mm aufgestreut werden.

6. Verfahren nach einem oder mehreren der Ansprüche 1 bis 5, **dadurch gekennzeichnet, dass** die Beschichtung (4) in einem kontinuierlichen Verfahren aufgebracht wird.

7. Verfahren nach einem oder mehreren der voranstehenden Ansprüche 1 bis 6, **dadurch gekennzeichnet, dass** zur Aushärtung der Beschichtung (4) der Wärmegehalt der Bauplatte eingesetzt wird.

8. Verfahren nach Anspruch 7, **dadurch gekennzeichnet, dass** die Temperatur der Bauplatte mindestens etwa 60°C beträgt.

9. Verfahren nach Anspruch 8, **dadurch gekennzeichnet, dass** der Wasseranteil der Beschichtung (4) abdampft.

10. Verfahren nach einem oder mehreren der Ansprüche 1 bis 9, **dadurch gekennzeichnet, dass** durch den Lackanteil der Beschichtung (4) Unebenheiten der oberen Deckschicht (2) der Bauplatte ausgeglichen werden.

11. Verfahren nach einem oder mehreren der Ansprüche 1 bis 10, **dadurch gekennzeichnet, dass** durch den Lackanteil der Beschichtung (4) der oberen Deckschicht (2) die Bauplatte versiegelt wird.

12. Verfahren nach einem oder mehreren der Ansprüche 1 bis 11, **dadurch gekennzeichnet, dass** die Beschichtung (4) vor der Beendigung des Abkühlvorgangs der Bauplatte ausgehärtet wird.

13. Verfahren nach einem oder mehreren der Ansprüche 1 bis 12, **dadurch gekennzeichnet, dass** die Beschichtung (4) durch Walzen (8) aufgetragen wird.

14. Verfahren nach Anspruch 13, **dadurch gekennzeichnet, dass** die Beschichtung (4) während des Walzenauftrags glatt gestrichen wird.

15. Verfahren nach Anspruch 13, **dadurch gekennzeichnet, dass** die Beschichtung (4) nach dem Walzenauftrag mit einem Abstreifer (9) geglättet wird.

## Claims

1. Method for producing a building board made of wooden material, in particular OSB board (1), with an upper covering layer (2) and a lower covering layer (3), consisting of at least three layers of scattered and resin-glued chips, which are pressed at an elevated pressure and elevated temperature, **characterised in that** after pressing, a coating (4) made of a water-based lacquer is applied at least to the upper covering layer (2), and **in that** loading and/or filler materials (5, 6) are added to the coating (4) directly after the application.

2. Method according to claim 1, **characterised in that** particles are applied to the coating prior to hardening (4).

3. Method according to claim 2, **characterised in that** the particles are scattered on.

4. Method according to claim 3, **characterised in that** particles (7) made of silica sand are scattered on.

5. Method according to claim 4, **characterised in that** particles with a particles size of less than 3 mm are scattered on.

6. Method according to one or more of claims 1 to 5, **characterised in that** the coating (4) is applied in a continuous process.

7. Method according to one or more of the preceding claims 1 to 6, **characterised in that** the heat content of the building board is used to harden the coating (4).

8. Method according to claim 7, **characterised in that** the temperature of the building board is at least 60°C.

9. Method according to claim 8, **characterised in that** the water content of the coating (4) is evaporated.

10. Method according to one or more of claims 1 to 9, **characterised in that** irregularities of the upper covering layer (2) of the building board are compensated by the lacquer content of the coating (4).

11. Method according to one or more of claims 1 to 10, **characterised in that** the building board is sealed by the lacquer content of the coating (4) of the upper covering layer (2).

12. Method according to one or more of claims 1 to 11, **characterised in that** the coating (4) is hardened prior to the ending of the cooling process of the building board.

13. Method according to one or more of claims 1 to 12, **characterised in that** the coating (4) is applied by rolling (8).

14. Method according to claim 13, **characterised in that** the coating (4) is smoothed out during the rolling application.

15. Method according to claim 13, **characterised in that** the coating (4) is smoothed after the rolling application with a skimmer (9).

## Revendications

1. Procédé de fabrication d'une planche en bois reconstitué pour le bâtiment, en particulier des planches d'OSB (1), la planche comportant une couche de recouvrement supérieure (2) et une couche de recouvrement inférieure (3), étant constituée d'au moins trois couches de copeaux dispersés et collés avec une résine, et que l'on comprime sous pression accrue et à température accrue, **caractérisé en ce qu'**après la compression, on applique, au moins sur la couche de recouvrement supérieure (2), un revêtement (4) fait d'une laque à base d'eau, et **en ce que** directement après cette application, on ajoute au revêtement des additifs et/ou des charges (5, 6).

2. Procédé selon la revendication 1, **caractérisé en ce que** l'on applique des particules sur le revêtement (4) avant le durcissement.

3. Procédé selon la revendication 2, **caractérisé en ce que** l'on saupoudre les particules.

4. Procédé selon la revendication 3, **caractérisé en ce que** l'on saupoudre des particules (7) de sable silicieux.

5. Procédé selon la revendication 4, **caractérisée en ce que** l'on saupoudre des particules d'une taille de particule inférieure à 3 mm.

6. Procédé selon l'une ou plusieurs des revendications 1 à 5, **caractérisé en ce que** l'on applique le revêtement (4) selon un procédé continu.

7. Procédé selon l'une ou plusieurs des revendications précédentes 1 à 6, **caractérisé en ce que** l'on utilise la chaleur contenue dans la planche pour le durcissement du revêtement (4).

8. Procédé selon la revendication 7, **caractérisé en ce que** la température de la planche s'élève au moins à environ 60°C.

9. Procédé selon la revendication 8, **caractérisé en ce que** la part d'eau du revêtement (4) s'évapore.

10. Procédé selon l'une ou plusieurs des revendications 1 à 9, **caractérisé en ce que** l'on compense des inégalités de la couche de recouvrement supérieure (2) de la planche par la part de laque du revêtement (4).

11. Procédé selon l'une ou plusieurs des revendications 1 à 10, **caractérisé en ce que** l'on vitrifie la couche de recouvrement supérieure (2) de la planche par la part de laque du revêtement (4).

12. Procédé selon l'une ou plusieurs des revendications 1 à 11, **caractérisé en ce que** l'on durcit le revêtement (4) avant achèvement du processus de refroidissement de la planche.

13. Procédé selon l'une ou plusieurs des revendications 1 à 12, **caractérisé en ce que** l'on applique le revêtement (4) par laminage (8).

14. Procédé selon la revendication 13, **caractérisé en ce que** l'on arase le revêtement (4) durant l'application par laminage.

15. Procédé selon la revendication 13, **caractérisé en ce que** l'on lisse le revêtement (4) après l'application par laminage, au moyen d'une racle.
